# EUROPEAN PATENT SPECIFICATION

(11) **EP 3 221 601 B1**
(45) Date of publication and mention of the grant of the patent: **31.10.2018**
(21) Application number: 15816903.7
(22) Date of filing: 10.11.2015
(51) Int. Cl.: F16B 21/16

(54) **A GUILLOTINE LOCK MECHANISM**
GUILLOTINEVERRIEGELUNGSMECHANISMUS
MÉCANISME DE SERRURE À GUILLOTINE

(30) Priority: 18.11.2014 TR 201413606
(43) Date of publication of application: 27.09.2017
(73) Proprietor: Otokar Otomotiv ve Savunma Sanayi Anonim Sirketi, 54580 Sakarya (TR)
(72) Inventor: KAYA, Kayhan, 54580 Arifiye/Sakarya (TR); BULAT, Hakan, 54580 Arifiye/Sakarya (TR)
(74) Representative: Inal, Aysegul Seda
(86) International application number: PCT/TR2015/050166
(87) International publication number: WO 2016/080933

(56) References cited:
- WO-A1-2004/018804
- DE-A1- 2 833 492
- DE-U1- 29 825 027
- FR-A- 1 184 976

## Description

### Technical Field related to the Invention

The invention subject to the application is related to a guillotine lock mechanism and the operation method of said mechanism; wherein said mechanism shall make it easier for parts having a closed and certain amount of volume to be coupled to the base and shall allow assembling and disassembling several times.

### Known State of the art related to the invention (Prior Art)

The invention subject to the application is formed of a guillotine lock mechanism which makes it easier for parts that have a certain volume and that are closed to be coupled to the base and allows assembly and disassembly several times.

A similar guillotine lock mechanism is disclosed e.g. by DE 298 25 027 U1.

Generally, it is a problem to design a secret surface/structure to provide coupling of parts that form a closed volume into which access is impossible but integration thereof to any kind of applicable surface (plastic, composite etc) is possible. Locks by means of L-brackets mounted parallel to one face of an inner wall of a base surface can be applied to elements having closed volumes which are concealed and into which access is not desired. The L bracket structures are coupled to the surface of the base; following this it is enabled for the bracket surfaces to contact the base by means of mechanical procedures such as screwing from the outside or by rivets; or the coupling is carried out by mechanical coupling by folding down the skirt section of the L bracket such that it presses onto the base section. In order to hide these lock structures that are coupled to the base by means of a plurality of coupling methods, elements having various physical characteristics such as a stopper, cap, or a plunger is used. This method which is applied for the lock structures to be aesthetical as said locks are desired to be concealed and to have architectural characteristics prevents any kind of procedure to be carried out on the base. It is impossible to access the related concealed element within an unexpected time range and to perform maintenance and repair studies in said closed volume.

Different methods are carried out in order to access the closed volume and the lock structure that are coupled with various methods to the base due to concern of concealment. The methods that are used can cause physical flaws and architectural damages. This lock method which causes physical, architectural, and aesthetic deformation to the structure is also risky in terms of safety. Any person can easily access the lock structure whose mounting is carried out by means of this method which is mechanical and easy to apply.

The lock systems that protect closed volumes that are desired to be prevented from being accessed easily and desired to provide concealing criteria, are provided by magnetic-mechanic connections that are called snap fasteners or by mechanic fitting aspects in the known state of the art.

Said structures are easily deformable, and enable the closed volume structures that need to be protected to be easily accessible. Lock structures that are formed by adhering that are require maintenance and repair at longer time intervals are not preferred as they take a long time to be mounted and damage the base they are being mounted on. Locks that are produced with the same methods damage the base they are applied on during mounting/dismounting.

The invention subject to the application creates a physical structure which is more resilient in comparison to kits that are formed with magnetic/mechanic connections that are called snap fasteners or that are formed with mechanical fitting aspects. Moreover a mechanic system which provides easier usage in comparison to lock structures that are formed by adhering are provided. When compared with kits that are mounted with mechanical procedures such as external screwing or rivets following the coupling to the surface of the base, the lock meets the concealment requirements fully by preventing easy access. When evaluated physically, architecturally or aesthetically, it can be said that the lock shall not deteriorate in appearance even after several uses, and shall not be deformed in any way.

### Brief description and aims of the invention

The invention subject to the application is related to a guillotine lock mechanism and the operation method of said mechanism; wherein said mechanism shall make it easier for parts having a closed and certain amount of volume to be coupled to the base and shall allow assembling and disassembling several times.

The mechanism formed of a guillotine lock structure, is an assembly of sub mechanic systems where said lock is made of a structure which shall not be deformed after many usages and which shall prevent being opened by unsafe devices/or non reliable people. The lock mechanic mechanism comprises sub parts such as a spring, pin, guillotine, a cavity, and a rope and has a structure where said parts operate in harmony with each other.

The following can be achieved by means of the guillotine lock mechanism of the invention, that has been formed by bringing together mechanic sub parts;
- The lock mechanism can be easily coupled to a base
- It enables easy usage as the mechanic structure is not damaged when the closed volume is accessed for maintenance or repair, etc.
- Provides precise concealment requirements by preventing easy access when compare with locks that are mounted by means of mechanic procedures such as external screwing or by rivets following the coupling to the surface of a base.
- When evaluated physically, architecturally and aesthetically, the lock shall not be deformed in shape in any way and shall keep its initial appearance even after several uses.

### Description of the figures illustrating the invention

The figures that have been prepared in order to further illustrate the guillotine lock mechanism developed according to the invention which does not allow coupling through a part in all areas that are possible to be applied to, which makes it easier for parts having a closed and certain amount of volume to be coupled to the base and allows assembling and disassembling several times have been described below.
F igure 1- Is the orthographic view of the guillotine lock in its open position
F igure 2- Is the orthographic view of the guillotine lock in its closed position
F igure 3- Is the rear view of the guillotine lock in its open position
F igure 4- Is the rear view of the guillotine lock in its closed position
F igure 5- Is the side view of the guillotine lock in its open position
F igure 6- Is the side view of the guillotine lock in its closed position
F igure 7- Is the side sectional view of the guillotine lock in its open position
F igure 8- Is the side sectional view of the guillotine lock in its closed position
F igure 9- Is the top view of the guillotine lock in its open position
F igure 10- Is the top view of the guillotine lock in its closed position
F igure 11- Is the detail which frees the guillotine lock rope from the stopping protrusion
F igure 12- Is the motion images of the pin part of the guillotine lock on the lock part

### Definitions of the aspects/ sections/ parts forming the invention

The parts/sections/aspects within the figures that have been prepared in order to further describe the guillotine lock mechanism developed by means of this invention have each been numbered and the references of each number has been listed below.
**1.** Lock connection wall
**2.** Spring pin
**3.** Lock body
**4.** Spring Guillotine
**5.** Guillotine channel
**6.** Guillotine Spring
**7.** Guillotine rope
**8.** Rope ring
**9.** Rope fixing protrusion
**10.** Mounting holes
**11.** Key slot
**12.** Key
**13.** Spring pin pressing lip

### Detailed Description of the Invention

The guillotine lock mechanism subject to the invention which shall make it easier for parts having a closed and certain amount of volume to be coupled to the base and shall allow assembling and disassembling several times comprises;
- A lock connection wall (1) perpendicular to the base, fixed to the part that is to be coupled by locking and which accommodates a spring pin (2),
- A spring pin (2) which is the first locking element of the lock mechanism,
- A lock body (3) comprising a spring guillotine (4), a guillotine channel (5), a guillotine spring (6), a guillotine rope (7), a rope ring (8), a rope fixing protrusion (9), mounting holes (10) and a key slot (11),
- A spring guillotine (4) which is the second locking element of the lock mechanism,
- A guillotine channel (5) which guides the spring guillotine's (4) motion,
- A spring (6) which pulls the spring guillotine (4) upwards by means of the tightening force for the spring guillotine (4) to pull free from the spring pin (2),
- A rope (7) which enables the spring guillotine (4) to lodge into the spring pin (2) by expansion of the spring (6),
- Two rope rings (8) which enable to change the direction of the force so that the force applied at a lateral plane onto the rope (7) can be applied vertically to the spring (6) and fixes the rope (7) to the lock body (3),
- A rope fixing protrusion (9) onto which the rope (7) is attached to,
- At least four mounting holes (10) into which the lock mechanism mounting is performed,
- A key (11) which enables to move the rope (7),
- A key slot (12) which enables the passage of the key (11) through the lock connection wall, and
- A spring pin pressing lip (13) which has been formed to fold the upper edge of the lock body (3) outward, and which enables the lock connection wall (1) to move downwards on the lock body (3) by pressing the spring pin (2) inward during locking.

The locking procedure of the guillotine lock mechanism subject to the invention comprises the following steps;
- Positioning the lock connection wall (1) parallel to the lock body (3); wherein the wall has been fixed to the part that is to be coupled by locking,
- The spring pin pressing lip (13) presses onto and tightens the spring pin (2) while the connection wall (1) is pushed downwards in order to carry out the locking procedure;
- The spring pin (2) moves towards the cavity in the mid section of the body (3) and protrudes out therefore entering into the cavity in the mid section of the body (3),
- Following this the key (12) is inserted into the key slot (11) and is attached to the end of the rope (7) thereby the rope (7) is slightly moved upward and pushed forward,
- During the process of pushing the rope forward, the lateral force is transferred to a vertical plane via the rope rings (8) and the guillotine spring (6) is tensioned thereby the spring guillotine (4) is pulled downwards through the guillotine channel (5) and is disposed into the neck section on the spring pin (2),
- During this moment the rope is then attached to the rope fixing protrusion (9) via the key (12) and the guillotine lock mechanism subject to the invention is locked.

The opening process of the guillotine lock mechanism subject to the invention comprises the following steps;
- The rope (7) is freed from the fixing protrusion (9) by means of the key (12), thereby the spring guillotine (4) is pulled upward through the guillotine channel (5) by means of the tension force of the guillotine spring (6) and is freed from the spring pin (2), and
- Following this the lock connection wall (1) is pulled backwards and taken out together with the part fixed thereon.

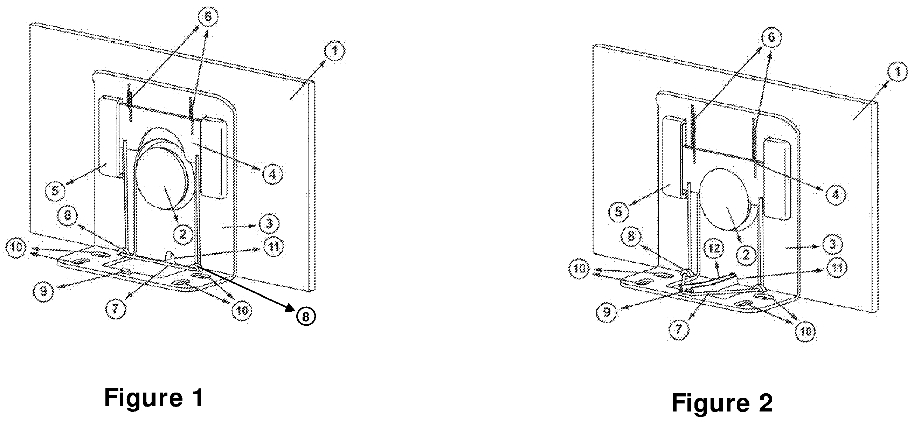

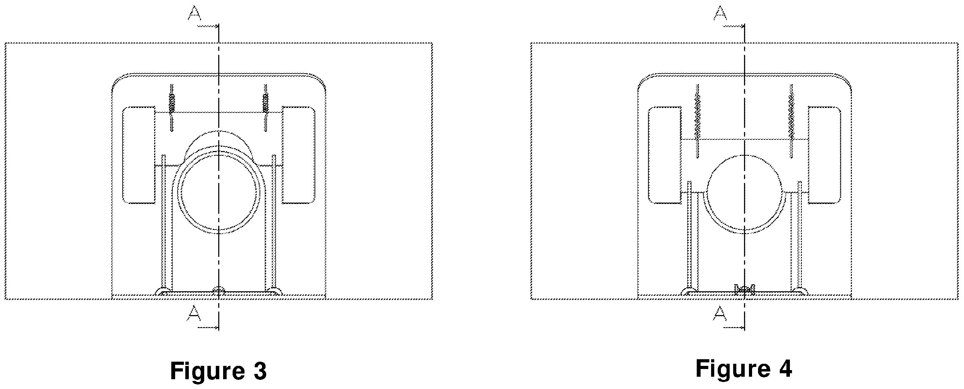

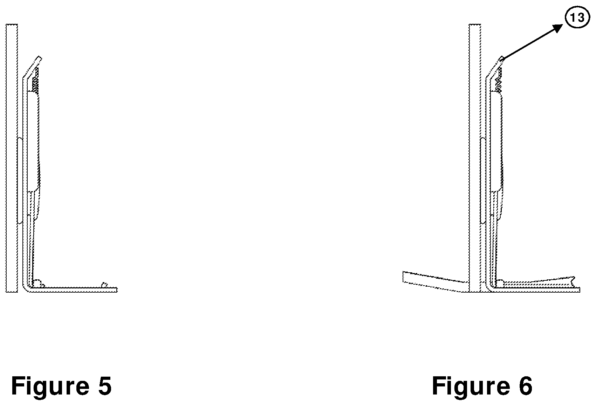

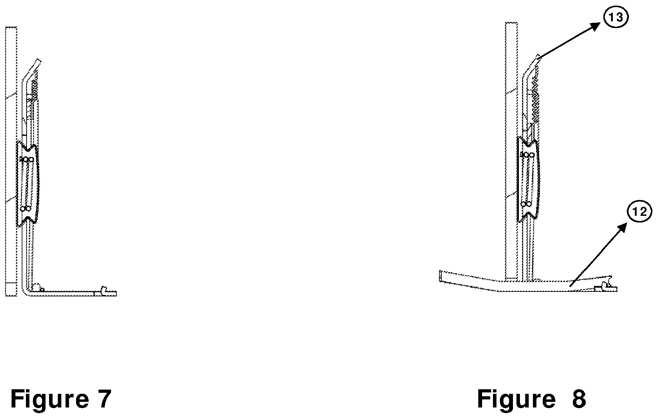

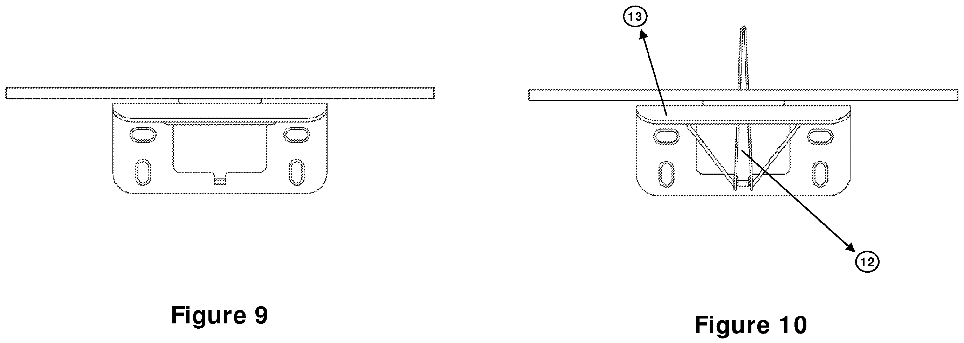

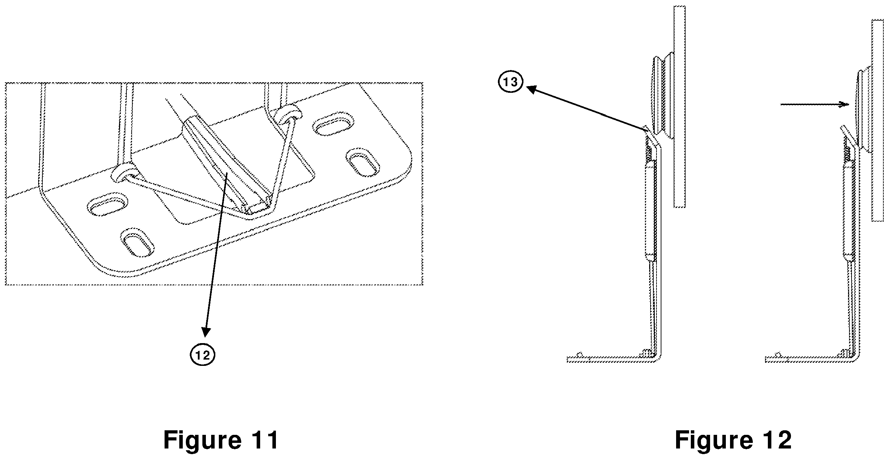

## Claims

1. The guillotine lock mechanism, which shall make it easier for parts having a closed and certain amount of volume to be coupled to the base and shall allow assembling and disassembling several times comprises;
• A lock connection wall (1) perpendicular to the base, fixed to the part that is to be coupled by locking and which accommodates a spring pin (2),
• A spring pin (2) which is the first locking element of the lock mechanism,
• A lock body (3) comprising a spring guillotine (4), a guillotine channel (5), a guillotine spring (6), a guillotine rope (7), a rope ring (8), a rope stopping protrusion (9), mounting holes (10) and a key slot (11),
• A spring guillotine (4) which is the second locking element of the lock mechanism,
• A guillotine channel (5) which guides the spring guillotine's (4) motion,
• A spring (6) which pulls the spring guillotine (4) upwards by means of the tightening force for the spring guillotine (4) to pull free from the spring pin (2),
• A rope (7) which enables the spring guillotine (4) to lodge into the spring pin (2) by expansion of the spring (6),
• Two rope rings (8) which enable to change the direction of the force so that the force applied at a lateral plane onto the rope (7) can be applied vertically to the spring (6) and fixes the rope (7) to the lock body (3),
• A rope fixing protrusion (9) onto which the rope (7) is attached to,
• At least four mounting holes (10) into which the lock mechanism mounting is performed,
• A key (11) which enables to move the rope (7),
• A key slot (12) which enables the passage of the key (11) through the lock connection wall, and
• A spring pin pressing lip (13) which has been formed to fold the upper edge of the lock body (3) outward, and which enables the lock connection wall (1) to move downwards on the lock body (3) by pressing the spring pin (2) inward during locking.

2. Locking procedure of the guillotine lock mechanism according to claim 1, which comprises the following steps;
• Positioning the lock connection wall (1) parallel to the lock body (3); wherein the wall has been fixed to the part that is to be coupled by locking,
• The spring pin pressing lip (13) presses onto and tightens the spring pin (2) while the connection wall (1) is pushed downwards in order to carry out the locking procedure;
• The spring pin (2) moves towards the cavity in the mid section of the body (3) and protrudes out therefore entering into the cavity in the mid section of the body (3),
• Following this the key (12) is inserted into the key slot (11) and is attached to the end of the rope (7) thereby the rope (7) is slightly moved upward and pushed forward,
• During the process of pushing the rope forward, the lateral force is transferred to a vertical plane via the rope rings (8) and the guillotine spring (6) is tensioned thereby the spring guillotine (4) is pulled downwards through the guillotine channel (5) and is disposed into the neck section on the spring pin (2),
• During this moment the rope is then attached to the rope fixing protrusion (9) via the key (12) and the guillotine lock mechanism subject to the invention is locked.

3. Opening process of the guillotine lock mechanism according to claim 1, which comprises the following steps;
• The rope (7) is freed from the fixing protrusion (9) by means of the key (12), thereby the spring guillotine (4) is pulled upward through the guillotine channel (5) by means of the tension force of the guillotine spring (6) and is freed from the spring pin (2), and
• Following this it is pulled out by pulling it back, together with the part that is fixed onto the lock connection wall (1).

## Patentansprüche

1. Der Guillotine- Verriegelungsmechanismus, der für Teile mit einem geschlossenen und einem bestimmten Volumen, die mit dem Boden zu verbinden sind, und der die mehrfache Montage und Demontage ermöglichen soll, umfasst;
• Wandanschluss des Verriegeln (1) senkrecht zum Boden, die an dem Teil befestigt ist, der durch Verriegeln zu verbinden ist und einen Federstift (2) aufnimmt,
• Ein Federstift (2), der das erste Verriegelungselement des Verriegelungsmechanismus ist,
• Verriegelungskörper (3) umfassend einer Feder-Guillotine (4), einem Guillotinenkanal (5), einer Guillotinenfeder (6), einem Guillotinenseil (7), eine Seilring (8), einem Seilstoppvorstehen (9), Montagelöchern (10) und einem Keilnut (11),
• Eine Feder-Guillotine (4), die das zweite Verriegelungselement des Verriegelungsmechanismus ist,
• Ein Guillotinenkanal (5), der die Bewegung der Feder-Guillotine (4) führt,
• Feder (6), die die Feder-Guillotine (4) mittels der Anziehkraft aufwärts zieht, damit sich die Feder-Guillotine (4) vom Federstift (2) frei löst,
• Seil (7), das es der Feder-Guillotine (4) ermöglicht, sich durch Expansion der Feder (6) in den Federstift (2) einzufügen,
• Zwei Seilringe (8), die es ermöglichen, die Richtung der Kraft zu ändern, so dass die in seitlicher Ebene auf das Seil (7) anwendet Kraft vertikale zur Feder (6) angewendet werden kann und das Seil (7) am Verriegelungskörper (3) befestigt,
• Ein Seilbefestigungsvorsprung (9), an dem das Seil (7) befestigt ist,
• Mindestens vier Montagelöchern (10), in die die Montage des Verriegelungsmechanismus durchgeführt wird
• Ein Keil (11), der es ermöglicht, das Seil (7) zu bewegen,
• Ein Keilnut (12), der den Durchgang des Schlüssels (11) durch die Wandanschluss des Verriegeln ermöglicht, und
• Federstiftdrucklippe (13), die ausgebildet ist, um die obere Kante des Verriegelungskörper (3) nach außen zu falten, und die es ermöglicht, dass sich der Wandanschluss des Verriegeln (1) auf dem Verriegelungskörper (3) nach unten bewegt, indem sie den Federstift (2) während der Verriegelung nach innen drückt.

2. Verriegelungsverfahren des Guillotine-Verriegelungsmechanismus nach Anspruch 1, das die folgenden Schritte umfasst;
• Positionieren der Wandanschluss des Verriegeln (1) parallel zum Verriegelungskörper (3); wobei die Wand an dem Teil befestigt ist, der durch Verriegeln zu verbinden ist,
• Die Federstiftdrucklippe (13) drückt und zieht den Federstift (2) an, während die Wandanschluss (1) nach unten gedrückt wird, um den Verriegelungsvorgang durchzuführen;
• Der Federstift (2) bewegt sich in Richtung des Hohlraums im mittleren Abschnitt des Körpers (3) und vorsteht dabei nach außen und tritt daher in den Hohlraum im mittleren Abschnitt des Körpers (3) ein,
• Anschließend wird der Keil (12) in den Keilnut (11) eingeführt und am Ende des Seils (7) angebracht, dabei das Seil (7) leicht nach oben bewegt und nach vorder gedrückt wird,
• Beim Vorschieben des Seils wird die Querkraft durch die Seilringe (8) auf eine vertikale Ebene übertragen und die Guillotinenfeder (6) gespannt, wodurch die Feder-Guillotine (4) durch den Guillotinenkanal (5) nach unten gezogen und im Halsabschnitt am Federstift (2) entsorgt wird,
• In diesem Moment wird das Seil dann durch den Keil (12) an dem Seilbefestigungsvorsprung (9) befestigt und der der Erfindung unterliegende Guillotine Verriegelungsmechanismus verriegelt.

3. Öffnungsprozess des Guillotine Verriegelungsmechanismus nach Anspruch 1, der die folgenden Schritte umfasst;
• Das Seil (7) wird durch dem Keil (12) vom Befestigungsvorsprung (9) befreit, dabei wird die Feder-Guillotine (4) durch den Guillotinenkanal (5) mittels der Zugkraft der Guillotinenfeder (6) nach oben gezogen und vom Federstift (2) frei gelöst, und
• Anschließend wird es durch Zurückziehen zusammen mit dem Teil, das an der Wandanschluss des Verriegeln (1) befestigt ist, herausgezogen.

## Revendications

1. Le mécanisme de verrouillage à guillotine, qui doit permettre de relier plus facilement pour les pièces ayant un volume fermé et certain de volume à coupler à la base et doit permettre l'assemblage et le démontage à plusieurs reprises comprend:
• Une paroi de connexion de verrouillage (1) perpendiculaire à la base, fixée à la partie à attacher par blocage et qui reçoit une goupille à ressort (2),
• Une goupille à ressort (2) qui est le premier élément de verrouillage du mécanisme de verrouillage,
• Un corps de verrouillage (3) comprenant une guillotine à ressort (4), un canal à guillotine (5), un ressort à guillotine (6), une corde à guillotine (7), un anneau de corde (8), une saillie d'arrêt de corde (9), des trous de montage (10) et une fente pour clé (11),
• Une guillotine à ressort (4) qui est le deuxième élément de verrouillage du mécanisme de verrouillage,
• Un canal à guillotine (5) qui guide le mouvement de la guillotine à ressort (4),
• Un ressort (6) qui tire la guillotine à ressort (4) vers le haut au moyen de la force de serrage de la guillotine à ressort (4) pour la libérer de la goupille à ressort (2),
• Une corde (7) qui permet à la guillotine à ressort (4) de se loger dans la goupille à ressort (2) par expansion du ressort (6),
• Deux anneaux de corde (8) qui permettent de modifier la direction de la force de sorte que la force exercée sur un plan latéral sur la corde (7) puisse être appliquée verticalement au ressort (6) et fixe la corde (7) au corps de verrouillage (3),
• Une saillie de fixation de corde (9) sur laquelle la corde (7) est attachée,
• Au moins quatre trous de montage (10) dans lesquels le montage du mécanisme de verrouillage est effectué,
• Une clé (11) permettant de déplacer la corde (7),
• Une fente de clé (12) qui permet le passage de la clé (11) à travers la paroi de connexion de la serrure, et
• Une lèvre de pression (13) de goupille à ressort qui a été formée pour replier le bord supérieur du corps de verrouillage (3) vers l'extérieur, et qui permet à la paroi de connexion de verrouillage (1) de descendre sur le corps de verrouillage (3) en appuyant sur la goupille à ressort (2) vers l'intérieur pendant le verrouillage.

2. Procédure de verrouillage du mécanisme de verrouillage à guillotine selon la revendication 1, qui comprend les étapes suivantes;
• Positionner la paroi de connexion de verrouillage (1) parallèlement au corps de verrouillage (3); dans lequel la paroi a été fixée à la pièce à coupler par blocage,
• La lèvre de pression (13) de la goupille à ressort appuie sur la goupille à ressort (2) et la serre pendant que la paroi de connexion (1) est poussée vers le bas pour effectuer la procédure de verrouillage;
• La goupille à ressort (2) se déplace vers la cavité dans la section médiane du corps (3) et fait saillie, pénétrant ainsi dans la cavité dans la section médiane du corps (3),
• Après cela, la clé (12) est insérée dans la fente de la clé (11) et est attachée à l'extrémité de la corde (7), ainsi la corde (7) est légèrement déplacée vers le haut et poussée vers l'avant.
• Pendant le processus de poussée de la corde en avant, la force latérale est transférée dans un plan vertical via les anneaux de corde (8) et le ressort à guillotine (6) est tendu ainsi la guillotine à ressort (4) est tirée vers le bas à travers le canal à guillotine (5) et est disposée dans la section de col sur la goupille à ressort (2),
• Pendant ce moment, la corde est ensuite attachée à la saillie de fixation de corde (9) via la clé (12) et le mécanisme de verrouillage à guillotine soumis à l'invention est verrouillé.

3. Procédure d'ouverture du mécanisme de verrouillage à guillotine selon la revendication 1, qui comprend les étapes suivantes;
• La corde (7) est libérée de la saillie de fixation (9) au moyen de la clé (12), ainsi la guillotine à ressort (4) est tirée vers le haut par le canal à guillotine (5) au moyen de la force de tension du ressort à guillotine (6) et est libérée de la goupille à ressort (2), et
• Ensuite, il est retiré en le tirant avec la partie fixée sur la paroi de connexion de verrouillage (1).
